# EUROPÄISCHE PATENTANMELDUNG

(11) **EP 1 491 298 A1**
(43) Veröffentlichungstag der Anmeldung: **29.12.2004**
(21) Anmeldenummer: 04014639.1
(22) Anmeldetag: 22.06.2004
(51) Int. Cl.: B25J 9/02

(54) **Portalroboter**

(30) Priorität: 25.06.2003 DE 10328764
(71) Anmelder: Schiefergruben Magog GmbH & Co. KG, 57392 Schmallenberg (DE)
(72) Erfinder: Schürmann, Erich, Prof. Dr.-Ing., 48324 Sendenhorst (DE)
(74) Vertreter: Patentanwälte Ostriga, Sonnet, Wirths & Roche

(57) **Zusammenfassung**

Die Erfindung betrifft einen Portalroboter zum Transport von Werkzeugen und/oder Werkstücken mit einem verfahrbaren Portal, an dem mindestens ein mehrdimensional verfahrbarer Tragarm (19) angeordnet ist, wobei in bzw. an der Bewegungsbahn des Portal wenigstens ein geneigtes Magazin (24) für Werkstücke bzw. Werkzeuge vorhanden ist.

Die Aufgabe der Erfindung besteht darin, das Konstruktionsprinzip des bekannten Portalroboters so zu verändern, dass der Programmieraufwand deutlich verringert wird.

Die Lösung dieser Aufgabe ergibt sich daraus, dass der am Portal angeordnete Tragarm (19) auf einer mit dem Winkel α zur Horizontalen geneigten, durch die x- und y-Achse gebildeten Ebene bewegbar angeordnet ist und dass die zugehörige z-Bewegungsachse des Tragarmes (19) parallel zur Be- und Entnahmerichtung (M) des Magazins (24) verläuft.

## Beschreibung

Die Erfindung betrifft einen Portalroboter zum Transport von Werkzeugen und/oder Werkstücken mit einem verfahrbaren Portal, an dem mindestens ein mehrdimensional verfahrbarer Tragarm angeordnet ist, wobei in bzw. an der Bewegungsbahn des Portal wenigstens ein geneigtes Magazin für Werkstücke bzw. Werkzeuge vorhanden ist.

Aus dem druckschriftlich belegbaren Stand der Technik sind derartige Portalroboter allgemein bekannt. An sich vorteilhafte Portalroboter haben jedoch den Nachteil, dass bei einer einfachen, 3-achsigen Programmierung z.B. die Werkstücke nur senkrecht gestapelt und gespeichert werden können.

Die Aufgabe der Erfindung besteht nunmehr darin, das Konstruktionsprinzip des bekannten Portalroboters so zu verändern, dass der Programmieraufwand deutlich verringert wird.

Die Lösung dieser Aufgabe ergibt sich aus den Merkmalen des Anspruchs 1, insbesondere den Merkmalen des Kennzeichenteils, wonach der am Portal angeordnete Tragarm auf einer mit dem Winkel α zur Horizontalen geneigten, durch die x- und y-Achse gebildeten Ebene bewegbar angeordnet ist und dass die zugehörige z-Bewegungsachse des Tragarmes parallel zur Be- und Entnahmerichtung des Magazins verläuft.

Die erfindungsgemäße Vorrichtung hat den wesentlichen Vorteil, dass sich der Programmieraufwand des Portalroboters deutlich verringert, da die Bezugsebenen von Tragarm und Magazin parallel zueinander angeordnet sind. Dies liegt daran, dass trotz Einsatz eines transportsicheren geneigten Magazins der Portalroboter keine zusätzliche Achse benötigt.

Bei einer vorteilhaften Ausführungsform der Erfindung ist darüber hinaus im Bewegungsbereich des Tragarms zusätzlich wenigstens eine Bearbeitungsstation für die Werkstücke angeordnet, welche eine Werkstückanlagefläche aufweist, die parallel zu der aus x- und y-Achse gebildeten Ebene angeordnet ist. Aufgrund der auch im Zusammenhang mit der Bearbeitungsstation vorhandenen Parallelität der Bezugsebenen ergibt sich auch hier eine deutlich vereinfachte Steuerung.

Eine weitere Ausführung der Erfindung ist dadurch gekennzeichnet, dass der Tragarm an einer Transporteinrichtung befestigt ist, die in x- und y-Richtung bewegbar auf einer Rahmenkonstruktion des Portals angeordnet ist. Hierdurch kann jeder Punkt des Bewegungsbereichs des Portalroboters auf einfache Weise erreicht werden.

Eine besonders bevorzugte Ausführungsform weist wenigstens eine Bearbeitungsstation auf, die an der Rahmenkonstruktion des Portals im Bewegungsbereich des Tragarms angeordnet ist.

Weitere Vorteile der Erfindung ergeben sich aus den nachfolgenden Unteransprüchen sowie der Beschreibung eines Ausführungsbeispiels. Es zeigen:
Fig. 1 eine Perspektivskizze eines Portalroboters und
Fig. 2 eine Seitenansicht des Portalroboters mit Magazin als Prinzipskizze.

In den Zeichnungen ist ein Portalroboter insgesamt mit der Bezugsziffer 10 bezeichnet.

Der Portalroboter 10 weist eine Rahmenkonstruktion 11 mit vertikalen Elementen 12, Diagonalelementen 13 und einer geneigten Dachkonstruktion 14 auf, wobei die gesamte Rahmenkonstruktion 11 auf Rädern 15 angeordnet ist. Die geneigte Dachkonstruktion 14 weist Längsbalken 16 und Querbalken 17 auf, wobei auf der Dachkonstruktion 14 eine balkenförmige Transporteinrichtung 18 für einen Tragarm 19 angeordnet ist. Mit Hilfe der Transporteinrichtung 18 kann der Tragarm 19 in einer geneigten, durch die x- und y-Achse aufgespannten Ebene an jeden Punkt der Dachkonstruktion 14 bewegt werden, die im Winkel α zur Horizontalen verläuft.

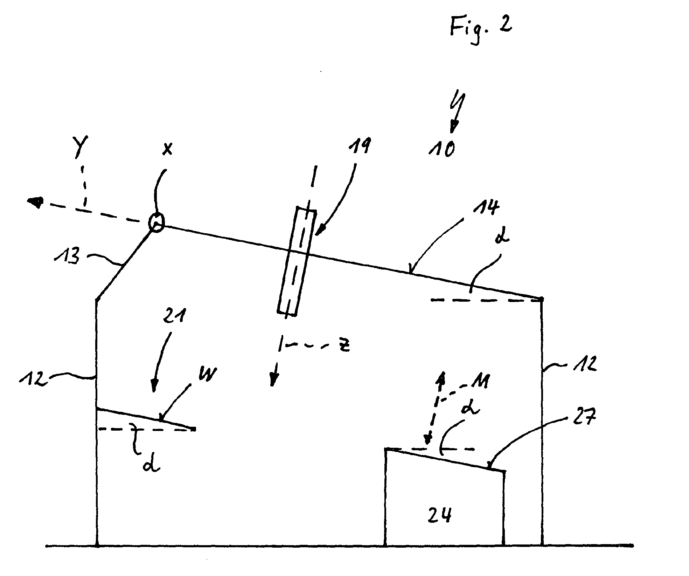

An einer Querverstrebung 20 sind zwei Bearbeitungsstationen 21 angeordnet, deren Werkstückanlageflächen W (s. Fig. 2) parallel zu der aus der x- und y-Achse gebildeten Bewegungsebene des Tragarms 19 angeordnet sind.

Der Portalroboter 10 steht mit seinen Rädern 15 auf zwei voneinander beabstandeten schienenartigen Führungen 22 und kann in den schienenartigen Führungen 22 mittels Fixierelementen 23 an einer gewünschten Stelle fixiert werden.

Der Portalroboter 10 übergreift zum einen eine Anzahl von geneigten, in Reihe angeordneten Magazinen 24 sowie einen Späneförderer 25, der die an den Bearbeitungsstationen 21 erzeugten, an einem Führungs- und Leitblech 26 abrutschenden Späne abtransportiert.

Die Magazine 24 weisen eine Magazinanlagefläche 27 auf, die parallel zu der aus x- und y-Achse gebildeten Bewegungsebene angeordnet ist. Auf der Magazinanlagefläche 27 sind stabförmige Anlagebereiche 28 zur genauen Positionierung von ringförmigen Werkstücken 29 angeordnet.

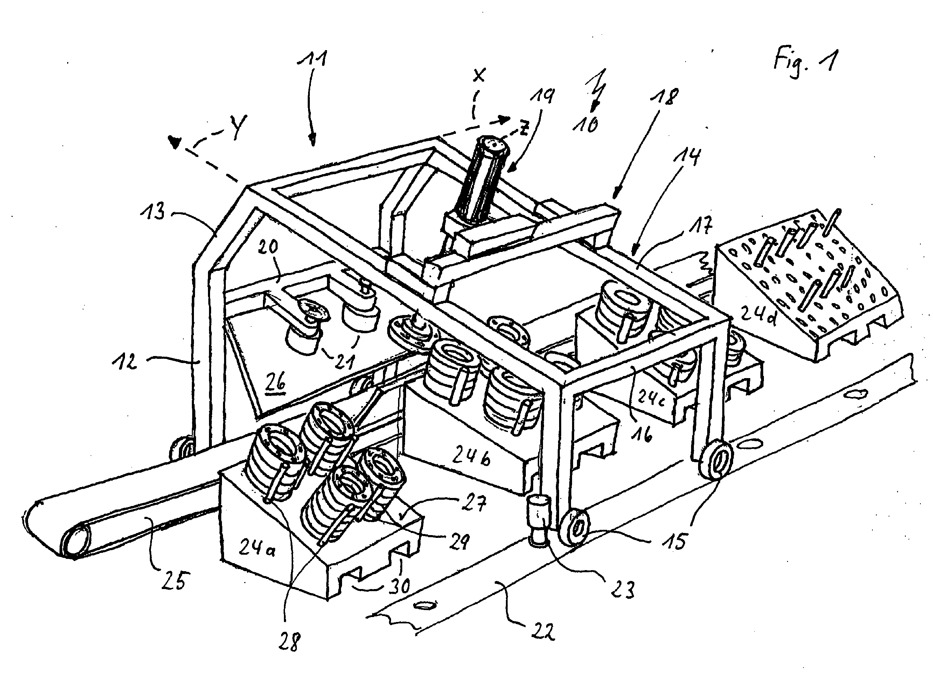

In der Fig. 1 erkennt man in der Bewegungsbahn unterhalb des Portalroboters 10 vier in Reihe angeordnete Magazine 24 a, b, c und d. Während das Magazin 24a bereits bearbeitete Werkstücke 29 enthält, entnimmt der Tragarm 19 des Portalroboters 10 Werkstücke 29 aus dem Magazin 24b zum Zwecke des Transports zu den Bearbeitungsstationen 21. Das Magazin 24c weist noch zu bearbeitende Werkstücke 29 auf, während das Magazin 24d vollständig leer ist. Die Magazine 24 a bis d können - wie aus entsprechenden bodenseitigen Hohlräumen 30 zu erkennen ist - mittels eines nicht dargestellten Gabelstaplers in die Bewegungsbahn des Portalroboters 10 oder aus der Bewegungsbahn des Portalroboters 10 heraus transportiert werden.

In der Fig. 2 erkennt man in der Seitenansicht, dass die Magazinanlagefläche 27 und die Bewegungsebene des Tragarms 19, die durch die x- und y-Achse gebildet wird, im gleichen Winkel α zur Horizontalen angeordnet sind. Dadurch ergibt sich die Situation, dass die z-Bewegungsachse des Tragarms 19 senkrecht auf der Magazinanlagefläche 27 steht bzw. die Entnahme- und Ablagerichtung M der Magazine 24 parallel zur z-Achse verläuft. Da die Bearbeitungsstationen 21 ebenfalls so geneigt angeordnet sind, dass auch deren Werkstückanlagefläche W im Winkel α zur Horizontalen verläuft, sind die Bewegungen des Tragarms 19 steuerungstechnisch wesentlich einfacher zu beherrschen.

Der vorbeschriebene Portalroboter 10 kann beispielsweise im Zusammenhang mit der Bearbeitung bzw. Lochung von Deckplatten aus Schiefer, Naturstein, Faserzement od. dgl. eingesetzt werden, die für die Anbringung an Fassaden und Dächern von Bauwerken vorgesehen sind. In einem solchen Fall würden die Magazine 24 statt der in Fig. 1 gezeichneten Werkstücke 29 die vorgenannten Deckplatten enthalten, die mittels des Portalroboters 10 auf entsprechende Art und Weise bearbeitet werden können.

## Patentansprüche

1. Portalroboter zum Transport von Werkzeugen und/oder Werkstücken, mit einem verfahrbaren Portal, an dem mindestens ein mehrdimensional verfahrbarer Tragarm angeordnet ist, wobei in bzw. an der Bewegungsbahn des Portal wenigstens ein geneigtes Magazin für Werkstücke bzw. Werkzeuge vorhanden ist, **dadurch gekennzeichnet, dass** der am Portal angeordnete Tragarm (19) auf einer mit dem Winkel (α) zur Horizontalen geneigten, durch die x- und y-Achse gebildeten Ebene bewegbar angeordnet ist und dass die zugehörige z-Bewegungsachse des Tragarmes (19) parallel zur Beund Entnahmerichtung (M) des Magazins (24) verläuft.

2. Portalroboter nach Anspruch 1, **dadurch gekennzeichnet, dass** im Bewegungsbereich des Tragarmes (19) zusätzlich wenigstens eine Bearbeitungsstation (21) für die Werkstücke (29) angeordnet ist, welche eine Werkstückanlagefläche (W) aufweist, die parallel zu der aus der x- und y- Achse gebildeten Ebene angeordnet ist.

3. Portalroboter nach Anspruch 1 oder 2, **dadurch gekennzeichnet, dass** der Tragarm (19) an einer Transporteinrichtung (18) befestigt ist, die in x- und y- Richtung bewegbar auf einer Rahmenkonstruktion (11) des Portals angeordnet ist.

4. Portalroboter nach einem der Ansprüche1 bis 3, **dadurch gekennzeichnet, dass** an der Rahmenkonstruktion des Portals im Bewegungsbereich des Tragarmes (19) wenigstens eine Bearbeitungsstation (21) angeordnet ist.

5. Portalroboter nach einem der vorangehenden Ansprüche, **dadurch gekennzeichnet, dass** unterhalb der Rahmenkonstruktion (11) eine Auffang- und Transporteinrichtung für Bearbeitungsabfälle vorhanden ist.

6. Portalroboter nach Anspruch 5, **dadurch gekennzeichnet, dass** die Vorrichtung zum Auffangen und Transportieren von Bearbeitungsabfällen als Bandförderer (25) ausgebildet ist.

7. Portalroboter nach einem der vorangehenden Ansprüche, **dadurch gekennzeichnet, dass** im Bewegungsbereich des Tragarmes (19) in bzw. an der Bewegungsbahn des Portalroboters (10) eine Vielzahl von in Reihe angeordneten, geneigten Magazinen (24 a, b, c, d) vorhanden ist.

8. Portalroboter nach einem der vorangehenden Ansprüche, **gekennzeichnet durch** eine schienengebundene Führung (22).

9. Portalroboter nach einem der vorangehenden Ansprüche, **dadurch gekennzeichnet, dass** das schienengeführte Fahrwerk eine Feststell- und Positioniereinrichtung (23) aufweist.
